# EUROPEAN PATENT APPLICATION

(11) **EP 2 863 584 A1**
(43) Date of publication of application: **22.04.2015**
(21) Application number: 13290249.5
(22) Date of filing: 17.10.2013
(51) Int. Cl.: H04L 12/26, G06F 9/50

(54) **Method and device for the allocation of software tasks**

(71) Applicant: ALCATEL LUCENT, 92100 Boulogne-Billancourt (FR)
(72) Inventor: Lou, Zhe, 2018 Antwerpen (BE)
(74) Representative: Plas, Axel Ivo Michel

(57) **Abstract**

According to an embodiment of the invention a method is disclosed for allocating software tasks of a software application. These software tasks are runnable on both a client device and a server. The method comprises several steps. In the first three steps, a resource usage policy is received (21) from the client device, resources used by the client device are received (22) and a resource usage profile for one of the software tasks is received (23) from the server. In a further step (24), available resources on the client device are determined from the resources used and the resource usage policy. In a final step (25), the software tasks are allocated to the client device if the resource usage profile does not exceed the available resources.

## Description

### Field of the Invention

The present invention generally relates to the allocation of software tasks of a software application to a cloud service.

### Background of the Invention

Nowadays Cloud computing penetrates into almost all application domains. It offers computing resources as a service over a network. End users access cloud-based applications through a web browser, a light weight desktop or a mobile application while the software and user's data are stored on servers at a remote location. Putting services in the cloud has certain advantages like limited requirement to the client side and better/easy maintenance of the services.

On the other hand, client devices such as mobile devices become more and more powerful. A mobile handheld device may comprise a multi-core processor and more than 2GB of memory. And its computing capabilities are still increasing. In fact, having all services running in the cloud and leaving those powerful end devices in an idle status is an underuse of the computation resources of the mobile device.

In US20120124193A1 a re-allocation technology is proposed to re-allocate software services running on a webserver to another webserver. The disadvantage of this techniques is that services are only moved from one server to another server, not making the maximum usage of all involved computation resources, especially the power from the end user's devices requesting the service. Moreover, this solution only helps to tackle the performance of the webservers and doesn't take into account the performance of the client device. For example, when the client device would be overloaded, the service relocation will not help to improve the Quality of Service (QoS) to the client.

### Summary of the Invention

It is the object of the present invention to solve or alleviate the above problems and disadvantages. In a first aspect, this is achieved by a method for allocating a software task of a software application. The task is runnable on both a client device and a server and the method further comprises the following steps:
- receiving a resource usage policy from the client device;
- receiving resources used by the client device;
- receiving a resource usage profile for the task from the server;
- determining available resources on the client device from the resources used and the resource usage policy;
- allocating the task to the client device if the resource usage profile does not exceed the available resources.

The above method thus allows allocating and reallocating software tasks between a server and a client device where the server is capable to run the software task as a service for the client device. The client device may have requested the server to run the software application or some software tasks of the software application as a service. The advantage is applicable in two directions. First, a server may reallocated a task to a client device, if possible depending on the resources used by the client device, in order to free resources in the server itself. Second, a server may also reallocate a task from the client to the server if the client is short in resources allowing to keep the Quality of Service at the client device to an optimal level.

The client device has resources available to perform the software task and the resource usage policy is then indicative for how these resources may be used for performing the software task. As the client device reports both the resources that are actually used at a given moment and how the resources may be used for the allocation of software tasks, the available resources for running one of the software tasks can be derived. The resource usage profile is then indicative for how much of the resources would be used when performing the software task on the client device.

Preferably the resources comprise at least one of the group of:
- battery power of a battery powering the client device;
- processing power of a central processing unit or CPU able to run the software task;
- processing power of a graphical processing unit or GPU able to process display information from the software task;
- memory capacity of a memory for storing data used by the software task;
- network capacity of a network connection connecting the client with the server
- storage capacity of a storage component able to store data used by the software task.

If the client device runs on battery power, specifying the profile and usage as battery power allows to control how long the client device should still run on its battery without recharging.

By specifying processing power, memory capacity and storage capacity within the resource usage profile, within the actual resource usage and within the resource usage policy it can be determined if the software task could actually run on the client device as required, i.e. according to its profile.

Even if a software task could run on a client device based on battery power, processing power, memory and local storage, the network bandwidth can still be a reason not to reallocate the software task to the client device as the network between the client and server may not have the needed bandwidth for the exchange of data between the software task on the client and other software tasks on the server.

According to a preferred embodiment, reward information about a reward receivable by the client when performing the software task is available. The allocating of the software task is then only performed if the client device agrees on the reward. The client device may then receive the reward after completion of the software task.

This allows encouraging users of a client device to have software tasks running on their client device that would normally run as a service on the server.

According to a further aspect, the invention also relates to a device adapted to perform the method according to the first aspect. This is achieved by a device for allocating a software task of a software application. The task being runnable on both a client device and a server. The device further comprising a dynamic service allocator adapted to:
- receive a resource usage policy from the client device;
- receive resources used by the client device;
- receive a resource usage profile for the software task from the server;
- determine available resources on the client device from the resources used and the resource usage policy;
- allocate the software task to the client device if the resource usage profile does not exceed the available resources.

When referring to a client device and a server, then this is in the context of a client-server model where a client device is connected to a server over a network, for example the internet or a local network such as a Local Area Network (LAN). A software application is then the assembly of software tasks running on both the server and the client. For example, in a video conferencing software application, several clients run software tasks to capture the video and upload the video to a central server. The server then runs software tasks to process the captured videos from the clients and to distribute the processed videos to the clients. The clients then run other software tasks to play back the videos received from the server. Depending on the capabilities to run certain software tasks, clients may be referred to as thin clients, fat clients or hybrid clients. Some software tasks may be specific for the client device such as for example, the capturing of a video, the display of a graphical user interface, the interaction with a user by an input device such as a mouse or a keyboard. Other software tasks may be specific for the server, such as for example the serving of web pages by a web server or the reception of emails by a mail server. Some software tasks may also be runnable by both a server and a client. For example, a client may run a word processing application locally or from a server by a remote desktop connection.

A server may also refer to an assembly of servers interconnected by a network such as the internet or a local network such as a LAN. When running software tasks on a server they may thus also run on different physical servers. To stress the unimportance of a physical location where a software task is running, running a software task on a server may also be referred as running a software task in the cloud where the cloud refers to an assembly of server capable of running the software task.

### Brief Description of the Drawings

Fig. 1 illustrates a system comprising a client, a server and a device for allocating software tasks according to a preferred embodiment of the present invention;
Fig. 2 illustrates a flow diagram for the execution of a method for the allocation of software tasks between a server and a client according to a preferred embodiment of the present invention.
Fig. 3 illustrates a flow diagram for performing a method for the allocation of software tasks between a server and a client according to a further embodiment of the present invention.

### Detailed Description of Embodiment(s)

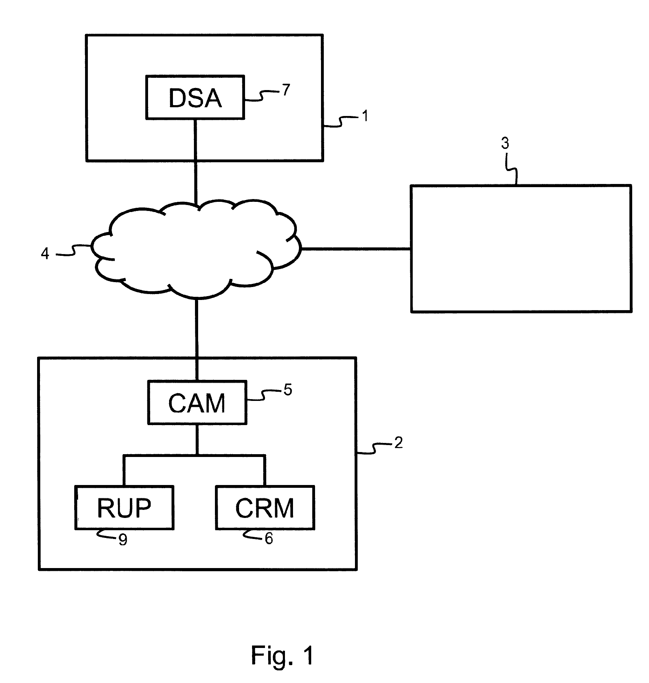

Fig. 1 illustrates a system according to embodiments of the present invention. The system comprises a client device 2 connected over a network 4 with a server 1 and a server 3. The client device 2 comprises a Client Application Management (CAM) service 5. The CAM 5 is capable of launching, turning off or resuming software processes or software tasks on the client device on instruction of the server 1. The client device 2 further comprises a Client Resource Monitoring service CRM 6 for the monitoring of usage of resources of the client 2. The CRM 6 reports the resource usage back to the CAM service 5.

The CRM service 6 may for example give an indication of the remaining battery power of a battery powering the client device if it is battery powered. If the software tasks managed the CAM service 5 are to be run on processor accessing a memory such as for example a Random Access Memory (RAM), the resources may comprise the processing power of the processor or the memory capacity of the memory. The resources may further also comprise the network capacity of the network connection connecting the client 2 with the network 4.

The client 2 further comprises a Resource Usage Policy (RUP) 9 where some general of specific rules are defined about the usage of the above resources for the allocation of software processes by the server 1. Examples of such rules may be:
- A maximum of 30% of the processor and memory resources may be used for additional computational tasks;
- No additional allocation of software tasks by the server 1 if the battery is at less than 20% of its maximum.

The RUP 9 may be chosen by the user of the client 2, for example through a user interface.

At some point in time, the client device 2 or the user of the client device 2 decides to run a software application. As the software application comprises software tasks that are to be executed as a service by the server 3, the CAM 5 receives this request to run the software tasks on the server 3. The CAM 5 then checks the RUP 9 whether dynamic service allocation may be applied or not. For example, if the battery power is too low or the processor is already above a certain usage threshold, the RUP may forbid to allocate the software tasks to the client itself. If the RUP allows dynamic allocation of the software tasks, the CAM 5 decides to apply dynamic service allocation and sends its RUP 9 to the Dynamic Service Allocator (DSA) 7 in the server 1. The DSA 7 in the server 1 is responsible for carrying out the dynamic service allocation and thus for allocating the software tasks to either the client 2 or the server 3.

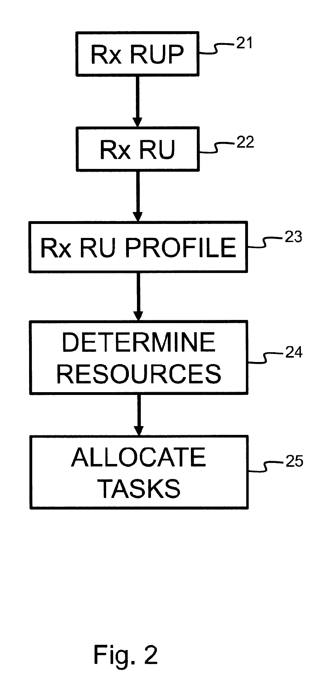

Fig. 2 shows a flow diagram illustrating the performing of the dynamic service allocation by the DSA 7 in the server 1 within the system of Fig. 1 according to an embodiment of the invention.

In a first step 21 and a second step 22, the DSA 7 receives the resource usage obtained from the CRM 6 and the RUP 9 respectively from the client 2. Then, in the step 23, it receives the resource usage profile form the server 3. This resource usage profile lists the software tasks that could either be run on the client 2 or the server 3 and how much resources each of the tasks need to be ran. This may be specified in some absolute or relative measures. For example the memory usage may be specified as 100 megabytes (MB) which is an absolute value or as 20% of the total capacity which is a relative value. As the DSA knows the used resources and RUP 9 from the client, it then determines, in a next step 24, the available resources on the client device 2. Then, in a last step 25, by comparing the available resources with the resource usage profile of the software tasks, the DSA 7 allocates the tasks to either the client 2 or the server 3.

By the allocation, the CAM 5 in the client 2 will thus receive an indication of the software tasks that it should run and the software tasks it should request from the server 3. At that point, the CAM 5 starts the execution of the software tasks on the client device 2 and requests the other software tasks as a service to the server 3.

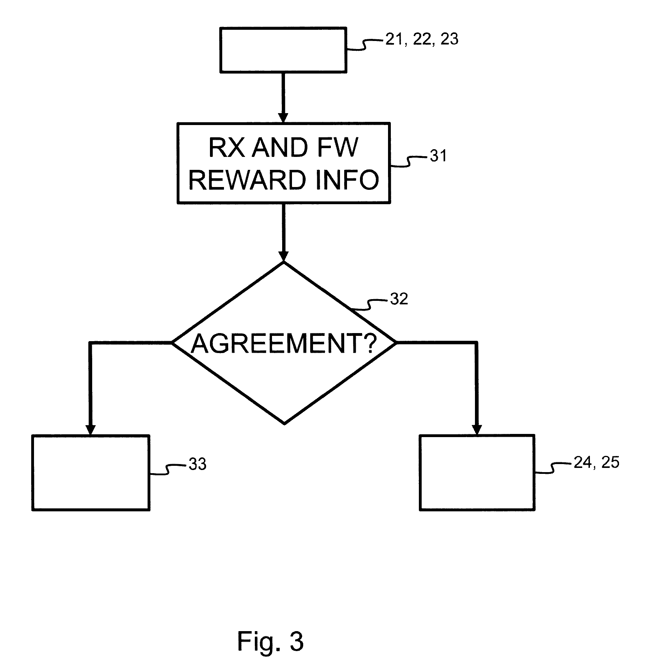

According to a further embodiment, rewards are used to encourage a user of a client device to run software tasks on its device instead of on the server 3. A flow diagram illustrating this embodiment is shown in Fig. 3. After the steps 21, 22 and 23, the DSA 7 receives reward information from the server 3 and sends this information to the CAM in the client device 2. This information specifies rewards that a user of the device 2 receives when running one or more of the software tasks on his device 2. The user then sends a confirmation to the DSA 7 whether he agrees or not with the proposed rewards. If he agrees, the DSA 7 continuous with the allocation of the tasks by steps 24 and 25 as described above. If the user does not agree with the offered rewards, the DSA 7 will allocate the tasks to the server 3 in a further step 33.

The user may give his agreement on the offered rewards in several ways. This may for example be done by a graphical user interface, but may also be automated in the CAM 5 based on predetermined preferences specified by the user.

The above embodiments will now be further illustrated by three use cases.

### USE CASE 1

A user is joining a video conference. A local webcam captures the video footage on the user's device 2 and streams it, as a local software task, to a central server 3, which is responsible for editing, composing and distributing videos of all users and thus responsible for executing a subset of the software tasks that are part of the complete video conferencing application. Video editing (e.g. detects the contour of the figure and removes the background) and composition (e.g. put figures together to form a new video footage) consume a lot of computing resources and might cause processing delay, which reduces the Quality of Experience (QoE) of the video conferencing. The video conferencing service provider offers rewards (e.g. voucher, discount, etc.) to users who are willing and able to contribute their client's resources to take over some of the video processing software tasks. In this case for instance, the client 2, if possible, performs the contour detection and the figure extraction. The server only performs the video composition software task. In such the server's load will be reduced and the client will be benefit from his contribution.

### USE CASE 2

A user is playing a virtual world application on his tablet device 2. A virtual world application, i.e. the software application, typically consumes a lot of computational power for rendering the 3D environment. For a mobile device, this means a large power consumption. When the battery is less than 20% of its full capacity, the CAM 5 application installed on the user's tablet device 2 requests the DSA 7 to reallocate the software tasks of the client application in order to have the scene rendering performed by a cloud service, i.e. on the server 3. Thus, after the reallocation of the software tasks according one of the embodiments above, the server 3 will render the scene for the client 2 and stream the rendered video back to the client as part of the software application. As such it lowers the battery consumption of the tablet device at the expense of increasing the network throughput, which is assumed to be affordable in this case.

### USE CASE 3

In this third use case, the same video conferencing software application as in the above use case is used and it is assumed that there are two users, a user A and a user B from the same company, that join the video conference. User A is using his mobile handheld device 2 and user B is using a powerful desktop. Based on the load of the mobile handheld, the powerful desktop and the server, the DSA 7 may decide to stream the user A's video footage to the powerful desktop of user B, which is then responsible for preprocessing the video footages of user A and user B. In this case, user B will benefit more as it takes care of not only his own video processing, but also user A's counterpart tasks.

In the above described embodiments, the servers 2 and 3 were shown as two separate entities. It will be apparent that the functions performed by these server according to the invention may also be performed on a single server, i.e. the server performing the DSA 7 is then also running the software tasks allocated by the DSA 7.

Furthermore, the server 3 has been referred to as a single server for running the software tasks. However, the software tasks may also be performed by a plurality of servers located in different geographical area and connected over a network or located in a single server farm. The server 3 may thus also act as a cloud service to the client 2.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for allocating a software task of a software application; said software task being runnable on both a client device (2) and a server (3); said method comprising the following steps:
- receiving (21) a resource usage policy (9) from said client device (2);
- receiving (22) resources used by said client device (2);
- receiving (23) a resource usage profile for said software task from said server (3);
- determining (24) available resources on said client device (2) from said resources used and said resource usage policy;
- allocating (25) said software task to said client device (2) if said resource usage profile does not exceed said available resources.

2. The method according to claim 1 wherein said resources comprise at least one of the group of:
- battery power of a battery powering said client device (2);
- processing power of a central processing unit or CPU able to run said software task;
- processing power of a graphical processing unit or GPU able to process display information from said software task;
- memory capacity of a memory for storing data used by said software task;
- network capacity of a network connection connecting said client (2) with said server (3);
- storage capacity of a storage component able to store data used by said software task.

3. The method according to claim 1 wherein reward information about a reward receivable (31) by said client when performing said software task is available; and wherein said allocating is only performed if said client device agrees (32) on said reward.

4. The method according to claim 1 further comprising the steps of:
- receiving a request from said client device (2) to run said software application on said server (3).

5. A device (1) for allocating a software task of a software application; said software task being runnable on both a client device (2) and a server (3); said device comprising a dynamic service allocator DSA (7) adapted to:
- receive (21) a resource usage policy from said client device;
- receive (22) resources used by said client device;
- receive (23) a resource usage profile for said software task from said server;
- determine available resources on said client device from said resources used and said resource usage policy;
- allocate said software task to said client device if said resource usage profile does not exceed said available resources.
